# EUROPÄISCHE PATENTSCHRIFT

(11) **EP 3 791 534 B1**
(45) Veröffentlichungstag und Bekanntmachung des Hinweises auf die Patenterteilung: **12.03.2025**
(21) Anmeldenummer: 19723381.0
(22) Anmeldetag: 08.05.2019
(51) Int. Cl.: H04L 9/08

(54) **VERFAHREN ZUM SICHERN EINES DATENAUSTAUSCHES IN EINER VERTEILTEN INFRASTRUKTUR**
METHOD FOR SECURING A DATA EXCHANGE IN A DISTRIBUTED INFRASTRUCTURE
PROCÉDÉ DE SÉCURISATION D'UN ÉCHANGE DE DONNÉES DANS UNE INFRASTRUCTURE RÉPARTIE

(30) Priorität: 08.05.2018 DE 102018111081
(43) Veröffentlichungstag der Anmeldung: 17.03.2021
(73) Patentinhaber: Uniscon universal identity control GmbH, 80339 München (DE)
(72) Erfinder: JÄGER, Hubert, 82049 Pullach (DE); KARATZAS, Christos, 81241 München (DE); ANTONY, Sibi, 80805 München (DE); FIETZ, Jaro, 19067 Rampe (DE); UEHLING, Moritz, 76227 Karlsruhe (DE)
(74) Vertreter: 2s-ip Schramm Schneider Bertagnoll Patent- und Rechtsanwälte Part mbB
(86) Internationale Anmeldenummer: PCT/EP2019/061875
(87) Internationale Veröffentlichungsnummer: WO 2019/215262

(56) Entgegenhaltungen:
- US-A1- 2006 023 887
- SHAMIR ET AL: "HOW TO SHARE A SECRET", IP.COM JOURNAL, IP.COM INC., WEST HENRIETTA, NY, US, 30 March 2007 (2007-03-30), XP013119902, ISSN: 1533-0001
- CHOI D ET AL: "Efficient and secure self-organized public key management for mobile ad hoc networks", IEICE TRANSACTIONS ON COMMUNICATIONS, COMMUNICATIONS SOCIETY, TOKYO, JP, vol. E91-B, no. 11, 1 November 2008 (2008-11-01), pages 3574 - 3583, XP001518992, ISSN: 0916-8516, DOI: 10.1093/IETCOM/E91-B.11.3574
- "Chapter 13: Key Management Techniques ED - Menezes A J; Van Oorschot P C; Vanstone S A", 1 October 1996 (1996-10-01), XP001525013, ISBN: 978-0-8493-8523-0, Retrieved from the Internet <URL:http://www.cacr.math.uwaterloo.ca/hac/>

## Beschreibung

### Gebiet der Erfindung

Die Erfindung betrifft ein Verfahren, mit dem ein sicherer Datenaustausch in einer verteilten Infrastruktur ermöglicht wird. Eine verteilte Infrastruktur ist hierbei ein Netzwerk von Computern bzw. Servern, die gegebenenfalls räumlich voneinander getrennt sind und über ein Kommunikationsnetzwerk miteinander verbunden sind. Die einzelnen Rechner bzw. Server werden in diesem Zusammenhang als Knoten des Netzwerks bezeichnet. Jeder Knoten des Netzwerks kann aus einem oder mehreren Rechnern bestehen. Für einen Rechner, Server oder einem Rechnerverbund in Netzwerk wird nachfolgend gemeinsam der Begriff "Knoten" verwendet.

### Hintergrund der Erfindung

Um einen sicheren Datenaustausch zwischen mehreren Knoten in einem Netzwerk zu gewährleisten, ist es bekannt, den Datenaustausch verschlüsselt abzuwickeln. Hierbei erzeugt jeder Knoten ein kryptographisches Schlüsselpaar mit einem privaten Schlüssel und einem öffentlichen Schlüssel. Der private Schlüssel verbleibt bei dem Knoten wo er erzeugt wurde und wird dort gespeichert. Der öffentliche Schlüssel wird mit an sich bekannten Schlüsselaustauschverfahren an die anderen Konten des Netzwerks übertragen bzw. verteilt. Die anderen Knoten des Rechnernetzwerks können dann diesen öffentlichen Schlüssel verwenden, um die Übertragung von Daten zu dem einen Knoten bzw. die Daten an sich zu verschlüsseln.

Nachteilig hierbei ist allerdings, dass jeder Knoten des Rechnernetzwerks sein eigenes Schlüsselpaar erzeugt, sodass jeder Knoten mit allen anderen Knoten des Netzwerks (oder zumindest mit jenen Knoten des Netzwerkes, mit denen ein Datenaustausch abgewickelt werden soll) die öffentlichen Schlüssel austauschen muss. In einem Netzwerk mit *n* Knoten würden demnach *n* verschiedene Schlüsselpaare erzeugt werden. Sofern jeder Knoten mit jedem anderen Knoten des Netzwerks einen gesicherten Datenaustausch abwickeln will, muss jeder Knoten allen anderen Knoten des Netzwerks seinen öffentlichen Schlüssel zur Verfügung stellen, sodass bis zu *n²-n* Schlüsselaustausche vorgenommen werden müssen, was einen erheblichen Zeit- und Ressourcenaufwand bedeutet.

Hinzu kommt, dass für eine Datenübertragung von einem ersten Knoten zu einem zweiten Knoten in dem Rechnernetzwerk der erste Knoten den korrekten, dem zweiten Knoten zugeordneten öffentlichen Schlüssel auswählen muss, um die zu übertragenden Daten für den zweiten Knoten entschlüsselbar zu verschlüsseln. Hierzu müssen in den Knoten erhebliche Ressourcen und Sicherungsmaßnahmen bereitgestellt bzw. implementiert werden, damit zu jedem Zeitpunkt gewährleistet ist, dass die zu übertragenden Daten für den jeweiligen Empfängerknoten korrekt verschlüsselt werden, d.h. der jeweilige korrekte öffentliche Schlüssel für die Verschlüsselung verwendet wird.

Ein weiterer Nachteil ergibt sich dann, wenn in einem Knoten des Netzwerks eine Erneuerung des Schlüsselpaares notwendig wird. In diesem Fall muss der entsprechende öffentliche Schlüssel an alle anderen Knoten des Netzwerks verteilt werden bzw. allen anderen Knoten zur Verfügung gestellt werden. Dieses sogenannte Schlüsselupdate kann erhebliche Zeit in Anspruch nehmen, sodass zu dem Knoten, der das neue Schlüsselpaar erzeugt hat, erst dann Daten verschlüsselt übertragen werden können, wenn das Schlüsselupdate abgeschlossen ist. Während des Schlüsselupdatens können keine Daten an diesen Knoten übertragen werden können bzw. die anderen Knoten verwenden während des Schlüsselupdates den alten und damit den falschen öffentlichen Schlüssel zum Verschlüsseln der Daten.

Wird der Schlüssel bzw. der Schlüsselaustausch mit einem digitalen Zertifikat versehen bzw. vorgenommen, kommt zu dieser Verzögerung noch die Verzögerung für das Ausstellen des entsprechenden Zertifikats hinzu, sodass der Schlüsselaustausch entsprechende mehr Zeit in Anspruch nimmt, sodass noch längere Ausfallzeiten hingenommen werden müssen.

Die Patentschrift US 2006/023887 offenbart ein Schlüsselmanagement auf Basis des "Threshold Secret Sharing" von Shamir, wobei jeder Knoten ein eigenes Schlüsselpaar ableitet.

### Aufgabe der Erfindung

Aufgabe der vorliegenden Erfindung ist es daher, ein Verfahren bereitzustellen, mit dem ein sicherer Datenaustausch in einer verteilten Infrastruktur bestehend aus einer Anzahl von Knoten ermöglicht wird, ohne die aus dem Stand der Technik bekannten Nachteile hinsichtlich der Schlüsselverwaltung hinnehmen zu müssen.

### Erfindungsgemäße Lösung

Gelöst wird diese Aufgabe mit einem Verfahren nach dem unabhängigen Patentanspruch. Vorteilhafte Ausgestaltungen des Verfahrens sind in den abhängigen Patentansprüchen angegeben.

Bereit gestellt wird demnach ein Verfahren zum Ermöglichen eines sicheren Datenaustausches zwischen einer Anzahl von Knoten eines Netzwerkes von Knoten,
wobei jeder Knoten ein Versiegelungsmodul (SSM) aufweist,
wobei ein Master-Knoten ein Geheimnis (S) erzeugt und das Geheimnis auf mehrere Geheimnisträger verteilt ausgibt, womit jeder Geheimnisträger im Besitz eines Teilgeheimnisses ist,
dem Versiegelungsmodul (SSM) eines jeden Knotens mindestens zwei Teilgeheimnisse von mindestens zwei Geheimnisträgern zur Verfügung gestellt werden,
in jedem Knoten unter Verwendung der jeweiligen zur Verfügung gestellten Teilgeheimnisse und unter Verwendung eines Schlüsselerzeugungsalgorithmus automatisch ein kryptographisches Schlüsselpaar erzeugt wird, wobei die den Knoten zur Verfügung gestellten Teilgeheimnisse und der Schlüsselerzeugungsalgorithmus so ausgewählt sind, dass in jedem Knoten automatisch identische kryptographische Schlüsselpaare erzeugt werden,
wobei das Versiegelungsmodul eines jeden Knotens aus den Teilgeheimnissen das Geheimnis (S) rekonstruiert,
wobei in jedem Knoten zum Erzeugen des kryptographischen Schlüsselpaares das in dem Knoten rekonstruierte Geheimnis (S) verwendet wird und wobei in jedem Knoten zum Erzeugen des kryptographischen Schlüsselpaares derselbe Schlüsselerzeugungsalgorithmus verwendet wird,
das Erzeugen des kryptographischen Schlüsselpaares in einem gesicherten Speicherbereich (DCU) des Knotens erfolgt und das kryptographische Schlüsselpaar ausschließlich in dem gesicherter Speicherbereich gespeichert wird und eine Verschlüsselung und/oder Entschlüsselung von Daten ausschließlich in dem gesicherten Speicherbereich (DCU) des Knotens erfolgt,
und der gesicherte Speicherbereich (DCU) so ausgestaltet ist, dass er ausschließlich volatile Speichermedien aufweist und bei einem unberechtigten Zugang zu dem gesicherten Speicherbereich (DCU) das kryptographische Schlüsselpaar gelöscht wird.

Die mindestens zwei Teilgeheimnisse können jeweils von einer vertrauenswürdigen Instanz den Knoten zur Verfügung gestellt werden.

Die vertrauenswürdigen Instanzen können Personen sein.

Vorteilhaft ist es ferner, wenn jeder Knoten unter Verwendung der jeweiligen zur Verfügung gestellten Geheimnisse ein Master-Geheimnis erzeugt, mit dem die kryptographischen Schlüsselpaare erzeugt werden, wobei die Geheimnisse von dem Master-Knoten so erzeugt werden, dass aus unterschiedlichen aber gleich großen Teilmengen der Geheimnisse das Master-Geheimnis erzeugt werden kann.

### Kurzbeschreibung der Figuren

Einzelheiten und Merkmale der Erfindung sowie konkrete Ausführungsbeispiele der Erfindung ergeben sich aus der nachfolgenden Beschreibung in Verbindung mit der Zeichnung, wobei die Erfindung nicht auf die nachfolgend beschriebenen Ausführungsbeispiele beschränkt ist. Es zeigt:
- Fig. 1: ein Ausführungsbeispiel mit vier Knoten eines Netzwerkes, anhand dessen eine Variante des erfindungsgemäßen Verfahren beschrieben wird; und
- Fig. 2: ein Ausführungsbeispiel des erfindungsgemäßen Verfahrens, mit dem das Hinzufügen eines neuen Knotens zu einem Netzwerk von Knoten beschrieben wird.

### Detaillierte Beschreibung der Erfindung

Erfindungsgemäß ist es vorgesehen, dass in einem Netzwerk jeder Knoten identische kryptographische Schlüsselpaare, bestehend aus einem privaten Schlüssel und einem öffentlichen Schlüssel, erzeugt. Dadurch ist gewährleistet, dass alle Knoten des Netzwerkes zum sicheren Datenaustausch denselben öffentlichen Schlüssel verwenden können, und zwar unabhängig davon, für welchen Knoten die Daten verschlüsselt werden sollen. Ein wesentlicher Vorteil hierbei liegt darin, dass in den einzelnen Knoten keinerlei Maßnahmen getroffen werden müssen, mit denen sichergestellt wird, dass ein Knoten zur verschlüsselten Kommunikation mit einem anderen Knoten des Netzwerkes auch den jeweils korrekten öffentlichen Schlüssel des anderen Knotens verwendet.

Beim erstmaligen Aufbau / Einrichten des Netzwerkes muss lediglich sichergestellt werden, dass alle am Netzwerk beteiligten Knoten über die entsprechende Berechtigung verfügen, d.h. berechtigt sind, am Netzwerk "teilzunehmen". "Teilnehmen" bedeutet in diesem Zusammenhang, dass die Knoten untereinander einen verschlüsselten Datenaustausch durchführen können bzw. dürfen.

Beim Hinzufügen eines neuen Knotens zum Netzwerk muss ferner lediglich sichergestellt werden, dass auch dieser neue Knoten über die entsprechende Berechtigung verfügt.

Diese beiden Vorgänge, d.h. Prüfen der Berechtigung beim erstmaligen Aufbau / Einrichten des Netzwerkes bzw. Prüfen der Berechtigung beim Hinzufügen eines neuen Knotens zum Netzwerk, müssen nur einmalig durchgeführt werden, sodass während des Betriebes des Netzwerkes keinerlei Leerlaufzeiten oder Ausfallzeiten aufgrund neuer / geänderter Schlüssel entstehen.

Obwohl alle Knoten über die identischen Schlüsselpaare verfügen, müssen diese erfindungsgemäß in dem jeweiligen Knoten neu erzeugt werden. Denn ein Verteilen des privaten Schlüssels, der für das Entschlüsseln von mit dem öffentlichen Schlüssel verschlüsselten Daten benötigt wird, von einem Knoten auf die anderen Knoten des Netzwerkes wird erfindungsgemäß unterbunden. D.h. der private Schlüssel darf den Knoten, in dem er erzeugt wurde, nicht verlassen. Hierzu sind die Knoten erfindungsgemäß so angepasst, dass der jeweilige private Schlüssel einen gesicherten Bereich des Knotens, die sogenannte Data Clean-Up Area, nicht verlassen muss. Um dies zu gewährleisten wird das Entschlüsseln der Daten ausschließlich in dieser Data Clean-Up Area durchgeführt. Das Erzeugen des Schlüsselpaares wird ebenfalls ausschließlich in der Data Clean-Up Area durchgeführt.

Erfindungsgemäß ist es also vorgesehen, dass in jedem Knoten identische Schlüsselpaare neu erzeugt werden. Um zu gewährleisten, dass in jedem Knoten identische Schlüsselpaare erzeugt werden, wird in jedem Knoten zum Erzeugen des kryptographischen Schlüsselpaares dasselbe Geheimnis (Secret) verwendet. Zudem wird in jedem Knoten zum Erzeugen des kryptographischen Schlüsselpaares dasselbe kryptographisches Verfahren (Schlüsselerzeugungsalgorithmus) verwendet. Als Geheimnis kann beispielsweise eine große Zufallszahl vorgesehen werden, die jedem Knoten zum Erzeugen des kryptographischen Schlüsselpaares zur Verfügung gestellt wird. Der private Schlüssel muss den Knoten damit nicht mehr verlassen, wobei gleichzeitig gewährleistet ist, dass jeder Knoten für jeden anderen Knoten im dem Netzwerk Daten verschlüsseln kann (und zwar mit dem eigenen erzeugten öffentlichen Schlüssel). Ein positiver Nebeneffekt ist hierbei, dass auch die öffentlichen Schlüssel nicht mehr ausgetauscht werden müssen, sodass auch die Gefahr, aus einem öffentlichen Schlüssel den dazugehörigen privaten Schlüssel zu errechnen, erheblich reduziert wird.

Das Geheimnis selbst kann von einem ausgezeichneten Knoten des Netzwerkes erzeugt werden und von diesem ausgezeichneten Knoten den anderen Knoten zur Verfügung gestellt werden. Der ausgezeichnete Knoten wird nachfolgend auch Master-Knoten genannten. Der Austausch des Geheimnisses mit den anderen Knoten kann hierbei ebenfalls verschlüsselt erfolgen. Zum Zweck des verschlüsselten Austausches des Geheimnisses kann jeder Knoten (einmalig) - mit Ausnahme des Master-Knotens, der das Geheimnis ja selbst erzeugt und damit auch kennt - ein temporäres kryptographisches Schlüsselpaar, bestehend aus einem temporären privaten Schlüssel und aus einem temporären öffentlichen Schlüssel, erzeugen. Jeder Knoten teilt dem Master-Knoten dann seinen öffentlichen Schlüssel mit, sodass der Master-Knoten das Geheimnis mit dem jeweiligen öffentlichen Schlüssel verschlüsseln und das verschlüsselte Geheimnis an den jeweiligen Knoten übertragen kann. Das verschlüsselte Geheimnis kann dann von dem jeweiligen Knoten mit seinem privaten Schlüssel entschlüsselt werden, um damit das kryptographische Schlüsselpaar zu erzeugen. Da das temporäre kryptographische Schlüsselpaar nur für die (einmalige) gesicherte Übertragung des Geheimnisses benötigt wird, kann das temporäre kryptographische Schlüsselpaar anschließend wieder vernichtet bzw. gelöscht werden.

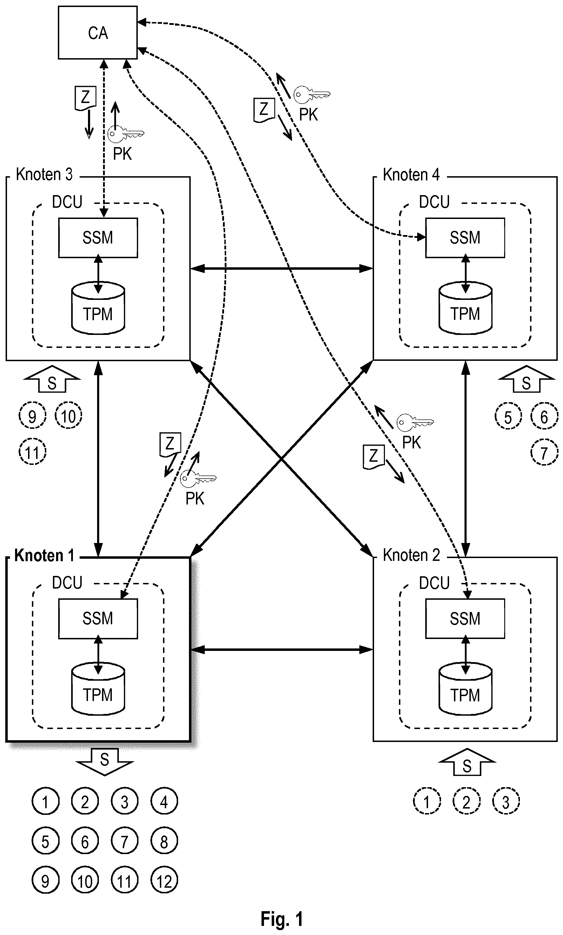

Ein alternatives, noch sichereres Verfahren zum Austausch des Geheimnisses wird mit Bezug auf Fig. 1 beschrieben. Dieses mit Bezug auf Fig. 1 beschriebene Verfahren hat zudem den zusätzlichen Vorteil, dass den Knoten jeweils mehrere Geheimnisse zu Verfügung gestellt werden müssen, mit denen der jeweilige Knoten das Schlüsselpaar erzeugt. Damit wird verhindert, dass eine einzige Instanz, z.B. eine einzelne Person, in einem Knoten ein Schlüsselpaar erzeugen kann, bzw. den Knoten veranlassen kann das Schlüsselpaar zu erzeugen. Denn eine einzelne Instanz ist nur im Besitz eines von mehreren Geheimnissen.

Zwar kann auch mit diesem einzelnen Geheimnis ein Schlüsselpaar erzeugt werden, dieses würde aber von den anderen Knoten aber nicht akzeptiert werden bzw. die anderen Knoten würden einen öffentlichen Schlüssel verwenden, der nicht zu dem privaten Schlüssel passt, sodass ein nicht korrekt erzeugtes Schlüsselpaar letztlich nutzlos ist.

Alternativ kann das Geheimnis auch außerhalb des Netzwerkes erzeugt werden, wobei lediglich gewährleistet werden muss, dass jedem Knoten solche Geheimnisse zur Verfügung gestellt werden, die beim Erzeugen der kryptographischen Schlüsselpaare zu identischen Schlüsseln führen.

Mit dem bisher beschriebenen Verfahren wird durch die Verschlüsselung bereits eine hohe Sicherheit beim Datenaustausch gewährleistet. Diese Sicherheit wird zudem noch weiter erhöht, da auch die öffentlichen Schlüssel, die für die Verschlüsselung der Datenübertragung verwendet werden, nicht mehr ausgetauscht werden müssen.

Insgesamt wird so ein höchstmögliches Maß an Sicherheit erreicht, denn
- die Schlüsselpaare werden automatisch ausschließlich in einer Data Clean-Up Area des jeweiligen Knotens erzeugt,
- die Verschlüsselung von Daten erfolgt vorzugsweise ausschließlich in der Data Clean-Up Area, sodass der öffentliche Schlüssel im Betrieb des Netzwerkes die Data Clean-Up Area nicht verlassen muss,
- die Entschlüsselung der Daten erfolgt ausschließlich in der Data Clean-Up Area, sodass der private Schlüssel die Data Clean-Up Area nicht verlassen muss,
- für das Erzeugen des Schlüsselpaares und damit auch des jeweiligen privaten Schlüssels, sind mehrere Geheimnisse notwendig, die auf mehrere Geheimnisträger verteilt sind, sodass eine einzelne Instanz das in dem Netzwerk benötigte Schlüsselpaar nicht alleine erzeugen kann, bzw. den Knoten nicht alleine veranlassen kann ein solche Schlüsselpaar zu erzeugen.

Nachdem jeder Knoten mit Hilfe des Geheimnisses ein kryptographisches Schlüsselpaar erzeugt hat kann prinzipiell jeder Knoten des Netzwerkes mit allen anderen Knoten des Netzwerkes einen verschlüsselten Datenaustausch abwickeln, wobei jeder Knoten unabhängig von dem Adressaten denselben öffentlichen Schlüssel zum Verschlüsseln der Daten verwenden kann.

Die Vertrauenswürdigkeit der einzelnen Knoten wird dadurch gewährleistet, dass ein Knoten nur dann im Besitz des für die Verschlüsselung benötigten öffentlichen Schlüssels sein kann, wenn er das kryptographische Schlüsselpaar mit Hilfe des Geheimnisses selbst erzeugt hat, wobei das Geheimnis selbst ja ebenfalls verschlüsselt ausgetauscht werden kann oder gemäß dem in Fig. 1 beschriebenen Verfahren auf mehrere Geheimnisträger verteilt werden kann, die dann ihre Geheimnisse dem jeweiligen Knoten zur Verfügung stellen müssen.

Um die Vertrauenswürdigkeit noch weiter zu erhöhen bzw. zu verbessern, kann es erfindungsgemäß vorgesehen sein, dass jeder Knoten für seinen erzeugten öffentlichen Schlüssel von einer vertrauenswürdigen Zertifizierungsstelle ein entsprechendes digitales Zertifikat (Public-Key-Zertifikat) anfordert, mit dem die Eigentümerschaft und weitere Eigenschaften des jeweiligen öffentlichen Schlüssels bestätigt werden. Hierfür muss der öffentliche Schlüssel nur ein einziges Mal der vertrauenswürdigen Zertifizierungsstelle zur Verfügung gestellt werden. Das von der vertrauenswürdigen Zertifizierungsstelle ausgestellte digitale Zertifikat wird dann an den jeweiligen Knoten übertragen und kann dort gespeichert werden. In der Folge kann sich dann ein Knoten des Netzwerkes mit seinem eigenen Zertifikat gegenüber den anderen Knoten authentifizieren, bevor er Daten verschlüsselt mit anderen Knoten des Netzwerkes austauscht. Der öffentliche Schlüssel selbst muss hierbei nicht übertragen werden.

Mit Hilfe des Zertifikats wird also verhindert, dass ein Knoten, sollte er in unberechtigter Weise an das kryptographische Schlüsselpaar gelangt sein, einen verschlüsselten Datenaustausch mit den anderen Knoten des Netzwerkes abwickeln kann, da hierfür das kryptographische Schlüsselpaar alleine nicht ausreicht. Mit geeigneten organisatorischen Maßnahmen kann das Ausstellen von Zertifikaten, mit denen eine falsche Identität des Knotens vorgetäuscht werden könnte, verhindert werden, etwa indem ein qualifiziertes Zertifikat nur von einer akkreditierten Zertifizierungsstelle und nur unter Vorlage eines amtlichen Ausweisdokuments ausgegeben werden kann. Diese Daten sind in dem Zertifikat gespeichert, sodass die anderen Knoten diese Daten prüfen können und eine verschlüsselte Kommunikation nur dann zulassen, wenn das Zertifikat aus ihrer Sicht valide ist.

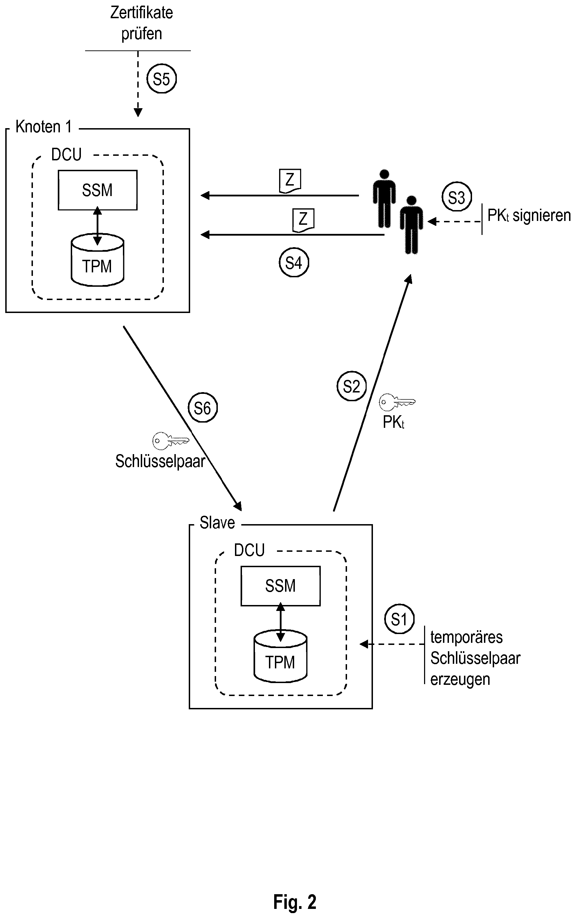

Vorstehend ist der erstmalige Aufbau bzw. das erstmalige Einrichten eines Netzwerkes bestehend aus mehreren Knoten beschrieben worden. Das Hinzufügen eines oder mehrerer weiterer Knoten zu einem bestehenden Netzwerk wird mit Bezug auf Fig. 2 näher beschrieben.

**Fig. 1** zeigt ein Blockdiagramm eines Netzwerkes mit vier Knoten, anhand dessen eine Variante des erfindungsgemäßen Verfahrens beschrieben wird.

Es sei angemerkt, dass das erfindungsgemäß Verfahren auch bei Netzwerken mit mehr als vier Knoten bzw. mit weniger als vier Knoten verwendet werden kann.

Erfindungsgemäß soll in dem Netzwerk, das hier aus den vier Knoten 1 bis 4 besteht, ein sicherer, d.h. verschlüsselter Datenaustausch ermöglicht werden. Die Kommunikationskanäle, über die der verschlüsselte Datenaustausch abgewickelt werden soll, sind in Fig. 1 mit fetten Doppelpfeilen gezeigt. Demnach soll bei dem in Fig. 1 gezeigten Beispiel jeder Knoten mit jedem Knoten Daten verschlüsselt austauschen können. Bei dem Knoten 1 handelt sich hier um einen sogenannten Master-Knoten, dessen Funktionalität nachfolgend erläutert wird.

Jeder der vier Knoten 1 bis 4 weist ein Versiegelungsmodul SSM (Sealing Software Module) auf, das angepasst ist, mit Hilfe eines Geheimnisses S ein kryptographisches Schlüsselpaar bestehend aus einem privaten Schlüssel und einem öffentlichen Schlüssel PK zu erstellen. Wie vorstehend erläutert, erzeugen alle Knoten identische kryptographische Schlüsselpaare.

Das Versiegelungsmodul SSM ist Bestandteil eines sogenannten gesicherten Speicherbereichs DCU, der auch Data Clean-Up Area genannt wird. Das Versiegelungsmodul SSM selbst wird ausschließlich in der Data Clean-Up Area DCU ausgeführt. Zudem ist es vorgesehen, dass die von dem Versiegelungsmodul SSM erzeugten kryptographischen Schlüsselpaare ausschließlich in der Data Clean-Up Area DCU gespeichert werden und die Verschlüsselung bzw. Entschlüsselung von Daten ebenfalls ausschließlich in der Data Clean-Up Area DCU erfolgt. Das Schlüsselpaar muss damit die Data Clean-Up Area DCU nicht verlassen, sodass ein Missbrauch des Schlüsselpaares effektiv verhindert wird.

Die Data Clean-Up Area DCU ist so ausgestaltet, dass bei einem unberechtigten Zugang zur Data Clean-Up Area sämtliche dort gespeicherten Daten, insbesondere die dort unverschlüsselt gespeicherten Daten und das Schlüsselpaar gelöscht werden. Die Data Clean-Up Area zeichnet sich insbesondere dadurch aus, dass keine persistenten Speichermedien vorhanden sind. Durch diese Maßnahme wird erreicht, dass bei einer Unterbrechung der Stromversorgung der Data Clean-Up Area DCU (z.B. wenn ein unberechtigter Zugriff auf die Data Clean-Up Area erkannt wird)
- keine unverschlüsselten Daten die Data Clean-Up Area DCU verlassen können,
- keine Daten mehr in der Data Clean-Up Area DCU vorliegen, und
- das ausschließlich in der Data Clean-Up Area DCU gespeicherte Schlüsselpaar gelöscht wird,
da ausschließlich volatile Speichertypen bzw. Speichermedien eingesetzt werden.

Mittels redundanter Data Clean-Up Areas in einem Knoten können die kryptographischen Schlüsselpaare gesichert werden, sodass etwa nach einer Stromunterbrechung in einer Data Clean-Up Area das kryptographische Schlüsselpaar aus einer replizierten Data Clean-Up Area wieder hergestellt werden kann. Die Kommunikation zwischen redundanten Data Clean-Up Areas erfolgt vorteilhafter Weise ebenfalls verschlüsselt.

Die in den Knoten 1 bis 4 gezeigten Trusted Platform Modules TPM können ebenfalls Bestandteil der jeweiligen Data Clean-Up Area DCU. Alternativ, aber nicht empfelhenswert, können die Trusted Platform Modules TPM auch außerhalb der jeweiligen Data Clean-Up Area DCU liegen, wobei hierbei die Daten vorzugsweise verschlüsselt zwischen dem Trusted Platform Module und der Data Clean-Up Area DCU ausgetauscht werden.

Damit die Versiegelungsmodule SSM der einzelnen Knoten 1 bis 4 jeweils ein identisches Schlüsselpaar erzeugen können, kann es vorgesehen sein, wie vorstehend erläutert, dass der Master-Knoten 1 ein Geheimnis S erzeugt und dieses Geheimnis, vorzugsweise verschlüsselt, an die anderen Knoten 2 bis 4 übergibt, die dann mit Hilfe dieses Geheimnisses das jeweilige Schlüsselpaar erzeugen.

Bei der in Fig. 1 gezeigten Ausgestaltung wird das Geheimnis S von dem Master-Knoten erzeugt. Das Geheimnis S wird hier allerdings nicht direkt an die anderen Knoten 2 bis 4 übertragen, sondern auf mehrere Geheimnisträger verteilt ausgegeben. Jeder Geheimnisträger ist damit im Besitz eines Teiles des Geheimnisses S (auch Teilgeheimnis genannt).

Bei dem in Fig. 1 gezeigten Beispiel sind 12 Geheimnisträger vorgesehen, auf die das von dem Master-Knoten erzeugte Geheimnis S aufgeteilt wird. Das Erzeugen des Geheimnisses S und die Aufteilung des Geheimnisses S auf die mehreren Geheimnisträger erfolgt so, dass zur Rekonstruktion des Geheimnisses S nur eine gewisse Teilmenge der Geheimnisträger benötigt wird, d.h. nur einige der Teilgeheimnisse benötigt werden, um das Geheimnis S zu rekonstruieren. Gemäß dem in Fig. 1 gezeigten Beispiel kann das Geheimnis S auf Basis der Teilgeheimnisse von drei Geheimnisträgern rekonstruiert werden. Für das Aufteilen und Rekonstruieren des Geheimnisses kann beispielsweise das Shamir Secret Sharing Verfahren verwendet werden.

Erfindungsgemäß ist es vorgesehen, dass das Geheimnis S auf mindestens zwei Geheimnisträger aufgeteilt wird und dass für die Rekonstruktion des Geheimnisses mindestens zwei Teilgeheimnisse notwendig sind. Damit wird effektiv gewährleistet, dass mindestens zwei Geheimnisträger - in der Regel besonders vertrauenswürdige Personen - notwendig sind, um einen Knoten das Erzeugen eines validen Schlüsselpaares zu veranlassen.

Nachdem der Master-Knoten das erzeugte Geheimnis S auf die Geheimnisträger 1 bis 12 aufgeteilt hat, begeben sich die Geheimnisträger 1 bis 3 zum Knoten 2, die Geheimnisträger 5 bis 6 zum Knoten 4 und die Geheimnisträger 9 bis 11 zum Knoten 3.

Die Geheimnisträger 1 bis 3 stellen dem Knoten 2, d.h. dem Versiegelungsmodul SSM des Knotens 2 ihre Teilgeheimnisse zur Verfügung, sodass das Versiegelungsmodul SSM des Knotens 2 zunächst das Geheimnis S aus den Teilgeheimnissen rekonstruieren kann und anschließend mit Hilfe des Geheimnisses S das kryptographische Schlüsselpaar erzeugen kann. Entsprechendes führen die Knoten 3 und 4 mit den Teilgeheimnissen der Geheimnisträger 9 bis 11 bzw. 5 bis 7 durch.

Um eine sichere Ausgabe des Geheimnisses durch den Master-Knoten bzw. eine sichere Eingabe der Teilgeheimnisse durch die Geheimnisträger zu gewährleisten, stellen die Knoten eine gesicherte Schnittstelle zur Verfügung. Über diese Schnittstelle werden das Geheimnis bzw. die Teilgeheimnisse für die Rekonstruktion des Geheimnisses verschlüsselt übertragen. Hierfür können die jeweiligen Knoten bzw. die Versiegelungsmodule SSM der jeweiligen Knoten ein temporäres Schlüsselpaar erzeugen, mit dem die auszugebenden bzw. einzugebenden Daten verschlüsselt werden.

Nachdem die Knoten 1 bis 4 das jeweilige kryptographische Schlüsselpaar erzeugt haben, veranlasst jeder der Knoten eine Zertifizierung seines jeweiligen öffentlichen Schlüssels PK durch eine Zertifizierungsstelle CA. Hierfür wird der jeweilige öffentliche Schlüssel PK an die Zertifizierungsstelle CA übertragen (was ebenfalls verschlüsselt erfolgen kann). Die Zertifizierungsstelle CA erzeugt ein entsprechendes digitales Zertifikat Z (Public-Key-Zertifikat) und überträgt dieses an den jeweiligen Knoten. Der an die Zertifizierungsstelle CA übertragene öffentliche Schlüssel kann dort gelöscht werden. Erfindungsgemäß muss also der öffentliche Schlüssel PK den Knoten, in dem er erzeugt wurde, nur ein einziges Mal verlassen, nämlich zum Erstellen eines Zertifikats durch die Zertifizierungsstelle CA. Für den verschlüsselten Datenaustausch mit den anderen Knoten müssen die öffentlichen Schlüssel nicht ausgetauscht werden, da alle Knoten identische Schlüsselpaare und damit auch identische öffentliche Schlüssel PK erzeugen. Das Zertifikat selbst kann wiederum in der jeweiligen Data Clean-Up Area DCU gespeichert werden.

Wie bereits erwähnt, muss einem Knoten der öffentliche Schlüssel eines anderen Knotens nicht mehr zur Verfügung gestellt werden, damit der Knoten Daten für den anderen Knoten verschlüsseln kann. Insbesondere müssen die Knoten keine Maßnahmen vorsehen, mit denen gewährleistet wird, dass zur verschlüsselten Kommunikation mit den anderen Knoten der jeweils korrekte öffentliche Schlüssel verwendet wird. Das ist insbesondere dann von Vorteil, wenn mehrere tausend Konten an dem Netzwerk beteiligt sind. Eindrucksvoll klar wird dieser Vorteil dann, wenn ein neuer Knoten in ein aus mehreren tausend Knoten bestehendes Netzwerk hinzugefügt wird. Denn dann müsste der öffentliche Schlüssel in aufwändiger Weise an alle anderen Knoten des Netzwerkes verteilt werden, damit diese anderen Knoten mit dem neuen Knoten verschlüsselt kommunizieren können.

Um die Sicherheit weiter zu erhöhen, ist er vorgesehen, dass ein Knoten sich den anderen Knoten als vertrauenswürdiger Knoten zu erkennen geben muss, bevor dieser Knoten mit den anderen Knoten einen verschlüsselten Datenaustausch abwickeln kann. Hierzu wird das Zertifikat Z, das die Knoten von der Zertifizierungsstelle für ihre jeweiligen öffentlichen Schlüssel PK angefordert haben, verwendet. Bevor beispielsweise der Knoten 3 dem Knoten 4 mit dem öffentlichen Schlüssel PK verschlüsselte Daten überträgt, muss der Knoten 3 an den Knoten 4 sein Zertifikat Z übertragen. Der Knoten 4 kann dann das Zertifikat Z prüfen und, wenn das Zertifikat als valide erkannt wurde, die Kommunikation zulassen. Vorteilhaft ist hierbei, wenn von der Zertifizierungsstelle CA ein qualifiziertes Zertifikat und nur unter Vorlage eines amtlichen Ausweisdokuments (z.B. eines verantwortlichen Managers des Betreibers des Knotens) ausgegeben wird. Diese Daten sind in dem Zertifikat gespeichert, sodass die anderen Knoten diese Daten prüfen können. Die übrigen Knoten müssen also nur mehr prüfen, ob das Zertifikat von einer zugelassen Zertifizierungsstelle ausgestellt wurde und wer als Inhaber des Zertifikats angegeben ist. Die Weitergabe des öffentlichen Schlüssels, der ohnehin jedem Knoten bekannt ist, kann so unterbleiben. Die Validierung der Zertifikate kann ressourcenschonend und effizient durchgeführt werden.

Bis auf die Zertifizierung der jeweiligen öffentlichen Schlüssel, müssen die öffentlichen Schlüssel den jeweiligen Knoten bzw. das jeweilige Versiegelungsmodul SSM nicht verlassen, wodurch ein besonders sicherer Betrieb des Netzwerkes möglich wird.

**Fig. 2** zeigt ein Blockdiagramm mit einem Knoten 1, dem ein weiterer Knoten (hier Slave genannt) hinzugefügt wird.

Selbstverständlich kann ein neuer Knoten Slave auch einem Netzwerk hinzugefügt werden, das mehr als einen, insbesondere mehrere tausend Knoten umfasst.

In einem ersten Schritt S1 erzeugt das Versiegelungsmodul SSM des Knotens Slave ein temporäres kryptographisches Schlüsselpaar. Dieses temporäre kryptographische Schlüsselpaar wird nur zum Zweck des Hinzufügens des Knotens zum Netzwerk benötigt und kann anschließend verworfen werden. Dieses temporäre kryptographisches Schlüsselpaar muss nicht mit den Geheimnissen erzeugt werden, mit denen die Schlüsselpaare der anderen Knoten des Netzwerkes erzeugt wurden. Ebenfalls muss dieses temporäre kryptographische Schlüsselpaar nicht notwendigerweise mit dem Versiegelungsmodul SSM erzeugt werden.

In einem weiteren Schritt S2 wird der öffentliche Schlüssel PKₜ des temporären kryptographischen Schlüsselpaares an eine Anzahl Instanzen, etwa eine Anzahl von Personen übertragen. Diese Personen müssen bestätigen, dass der Konten Slave, von dem sie den öffentlichen Schlüssel PKₜ des temporären kryptographischen Schlüsselpaares erhalten haben, tatsächlich zum Netzwerk hinzugefügt werden soll. Die Bestätigung kann dadurch erfolgen, indem diese Personen in dem Schritt S3 den öffentlichen Schlüssel PKₜ des temporären kryptographischen Schlüsselpaares jeweils mit ihrem persönlichen Schlüssel signieren und den signierten öffentlichen Schlüssel PKt des temporären kryptographischen Schlüsselpaares als Zertifikat Z in dem Schritt S4 an einen Master-Knoten (der in Fig. 2 der Knoten 1 ist) übertragen.

Die Instanzen, die den öffentlichen Schlüssel PKt des temporären kryptographischen Schlüsselpaares bestätigen können auch technische Einrichtungen sein, etwa Computer, die nicht Teil des Netzwerkes oder Teil des Netzwerkes sind.

Der Master-Knoten prüft in dem Schritt S5 die übermittelten Zertifikate Z anhand der jeweiligen öffentlichen Schlüssel der Personen und veranlasst bei erfolgreicher Prüfung, dass der Knoten Slave in das Netzwerk aufgenommen wird. Eine positive Prüfung kann zudem voraussetzen, dass von einer gewissen Anzahl von Personen entsprechende Zertifikate Z an den Master-Knoten übertragen wurden. Wird beispielsweise in dem Schritt S1 der temporäre öffentliche Schlüssel PKₜ an 6 Personen übertragen, kann es vorgesehen sein, dass 4 der 6 Personen ein entsprechendes Zertifikat Z an den Master-Knoten senden müssen, damit der neue Knoten Slave dem Netzwerk endgültig hinzugefügt werden kann. Dies ist gleichbedeutend damit, dass 4 Personen der Aufnahme des neuen Knotens in das Netzwerk zugestimmt haben.

Mit den im Schritt S4 übermittelten Zertifikaten Z wird dem Master-Knoten gleichzeitig auch der temporäre öffentliche Schlüssel PKₜ des hinzuzufügenden Knotens Slave bekannt gemacht, da der temporäre öffentliche Schlüssel PKₜ Bestandteil der Zertifikate ist.

War die Prüfung in dem Schritt S5 erfolgreich, d.h. wenn ausreichend viele Personen ein gültiges Zertifikat Z an den Master-Knoten übermittelt haben, überträgt der Masterknoten in dem Schritt S6 das Schlüsselpaar, welches für die Kommunikation des neuen Knotens Slave mit den anderen Knoten des Netzwerkes benötigt wird, an den hinzuzufügenden Knoten Slave. Dieses übertragene Schlüsselpaar ist identisch mit den Schlüsselpaaren, die in den anderen Knoten des Netzwerkes erzeugt wurden.

Die Übertragung dieses Schlüsselpaares an den neuen Knoten Slave erfolgt verschlüsselt, wobei zum Verschlüsseln vorzugsweise der temporäre öffentliche Schlüssel PKₜ des hinzuzufügenden Knotens verwendet wird.

Der neue Knoten Slave speichert das Schlüsselpaar in der Data Clean-Up Area DCU bzw. in dem Trusted Platform Module des Knotens Slave. Das Hinzufügen des neuen Knotens Slave zu dem Netzwerk ist damit abgeschlossen. Das im Schritt S1 erzeugte temporäre Schlüsselpaar kann gelöscht werden. Für den Datenaustausch des neuen Knotens mit den anderen Knoten des Netzwerkes muss weder der öffentliche Schlüssel noch der private Schlüssels des neuen Knotens den neun Knoten, insbesondere die Data Clean-Up Area DCU des neuen Knotens verlassen.

Insgesamt wird dadurch auch vermieden, dass der öffentliche Schlüssel eines neu in das Netzwerk hinzuzufügenden Knotens an alle anderen Knoten des Netzwerkes verteilt werden muss.

### Bezugszeichen:

- CA: Zertifizierungsstelle (Certification Authority)
- TPM: Trusted Platform Module
- DCU: gesicherter Speicherbereich (Data Clean-Up Area)
- S: Geheimnisse (Secret)
- S1 bis S6: Schritte
- SSM: Versiegelungsmodul (Sealing Software Module)
- Z: Zertifikat (digitales)
- PK: öffentlicher Schlüssel (Public Key)
- PKₜ: temporärer öffentlicher Schlüssel (Public Key)
- 1 bis 10: Geheimnisträger, z.B. vertrauenswürdige Personen

## Patentansprüche

1. Verfahren zum Ermöglichen eines sicheren Datenaustausches zwischen einer Anzahl von Knoten eines Netzwerkes von Knoten, wobei jeder Knoten ein Versiegelungsmodul (SSM) aufweist, wobei
- ein Master-Knoten ein Geheimnis (S) erzeugt und das Geheimnis auf mehrere Geheimnisträger verteilt ausgibt, womit jeder Geheimnisträger im Besitz eines Teilgeheimnisses ist,
- dem Versiegelungsmodul (SSM) eines jeden Knotens mindestens zwei Teilgeheimnisse von mindestens zwei Geheimnisträgern zur Verfügung gestellt werden,
- in jedem Knoten unter Verwendung der jeweiligen zur Verfügung gestellten Teilgeheimnisse und unter Verwendung eines Schlüsselerzeugungsalgorithmus automatisch ein kryptographisches Schlüsselpaar erzeugt wird, wobei
die den Knoten zur Verfügung gestellten Teilgeheimnisse und der Schlüsselerzeugungsalgorithmus so ausgewählt sind, dass in jedem Knoten automatisch identische kryptographische Schlüsselpaare erzeugt werden, wobei das Versiegelungsmodul eines jeden Knotens aus den Teilgeheimnissen das Geheimnis (S) rekonstruiert, wobei in jedem Konten zum Erzeugen des kryptographischen Schlüsselpaares das in dem Knoten rekonstruierte Geheimnis (S) verwendet wird und wobei in jedem Knoten zum Erzeugen des kryptographischen Schlüsselpaares derselbe Schlüsselerzeugungsalgorithmus verwendet wird,
das Erzeugen des kryptographischen Schlüsselpaares in einem gesicherten Speicherbereich (DCU) des Knotens erfolgt und das kryptographische Schlüsselpaar ausschließlich in dem gesicherter Speicherbereich gespeichert wird und eine Verschlüsselung und/oder Entschlüsselung von Daten ausschließlich in dem gesicherten Speicherbereich (DCU) des Knotens erfolgt, und
der gesicherte Speicherbereich (DCU) so ausgestaltet ist, dass er ausschließlich volatile Speichermedien aufweist und bei einem unberechtigten Zugang zu dem gesicherten Speicherbereich (DCU) das kryptographische Schlüsselpaar gelöscht wird.

2. Verfahren nach dem vorhergehenden Anspruch, wobei das Erzeugen des kryptographischen Schlüsselpaares von dem Versiegelungsmodul (SSM) durchgeführt wird, das in dem gesicherten Speicherbereich ausgeführt wird.

3. Verfahren nach Anspruch 1, wobei die Geheimnisträger Personen sind.

4. Verfahren nach einem der vorhergehenden Ansprüche, wobei die mindestens zwei Teilgeheimnisse von dem Master-Knoten erzeugt werden.

5. Verfahren nach Anspruch 4, wobei jeder Knoten unter Verwendung der jeweiligen zur Verfügung gestellten Teilgeheimnisse das Geheimnis (S) erzeugt, mit dem die kryptographischen Schlüsselpaare erzeugt werden, wobei die Teilgeheimnisse von dem Master-Knoten so erzeugt werden, dass aus unterschiedlichen aber gleich großen Teilmengen der Teilgeheimnisse das Geheimnis (S) erzeugt werden kann.

## Claims

1. Method for enabling a secure data exchange between a number of nodes of a network of nodes, wherein each node has a sealing module (SSM), wherein
- a master node generates a secret (S) and distributes the secret to a plurality of secret holders, whereby each secret holder is in possession of a partial secret,
- the sealing module (SSM) of each node is provided with at least two partial secrets from at least two secret holders,
- a cryptographic key pair is automatically generated in each node by using the respective partial secrets provided and by using a key generation algorithm, wherein
the partial secrets provided to the nodes and the key generation algorithm are selected such that identical cryptographic key pairs are automatically generated in each node, wherein the sealing module of each node reconstructs the secret (S) from the partial secrets, wherein the secret (S) reconstructed in the node is used in each node for generating the cryptographic key pair, and wherein the same key generation algorithm is used in each node for generating the cryptographic key pair,
the cryptographic key pair is generated in a secure storage region (DCU) of the node and the cryptographic key pair is stored exclusively in the secure storage region and data is encrypted and/or decrypted exclusively in the secure storage region (DCU) of the node, and
the secure storage region (DCU) is designed such that it exclusively contains volatile storage media and in the event of unauthorized access to the secure storage region (DCU), the cryptographic key pair is deleted.

2. Method according to the preceding claim, wherein the cryptographic key pair is generated by the sealing module (SSM) which is executed in the secure storage region.

3. Method according to claim 1, wherein the secret holders are persons.

4. Method according to any of the preceding claims, wherein the at least two partial secrets are generated by the master node.

5. Method according to claim 4, wherein each node generates the secret (S) by using the respective partial secrets provided, with which secret the cryptographic key pairs are generated, wherein the partial secrets are generated by the master node such that the secret (S) can be generated from different but equally large partial quantities of the partial secrets.

## Revendications

1. Procédé destiné à permettre un échange de données sécurisé entre un certain nombre de nœuds d'un réseau de nœuds, dans lequel chaque nœud présente un module de scellement (SSM), dans lequel
- un nœud maître crée un secret (S) et envoie le secret sur plusieurs détenteurs de secret, moyennant quoi chaque détenteur de secret est en possession d'un secret partiel,
- au moins deux secrets partiels d'au moins deux détenteurs de secret sont mis à la disposition du module de scellement (SSM) de chaque nœud,
- dans chaque nœud, en utilisant les secrets partiels respectifs mis à disposition et en utilisant un algorithme de génération de clés, une paire de clés cryptographiques est générée automatiquement, dans lequel
les secrets partiels mis à la disposition des nœuds et l'algorithme de génération de clés sont choisis de sorte que des paires de clés cryptographiques identiques sont générées automatiquement dans chaque nœud, dans lequel le module de scellement de chaque nœud reconstruit le secret (S) à partir des secrets partiels, dans lequel le secret (S) reconstruit dans le nœud est utilisé dans chaque compte pour générer la paire de clés cryptographiques, et dans lequel le même algorithme de génération de clés est utilisé dans chaque nœud pour générer la paire de clés cryptographiques,
la génération de la paire de clés cryptographiques est effectuée dans une zone de stockage sécurisée (DCU) du nœud et la paire de clés cryptographiques est stockée exclusivement dans la zone de stockage sécurisée et un chiffrement et/ou un déchiffrement de données sont effectués exclusivement dans la zone de stockage sécurisée (DCU) du nœud, et
la zone de stockage sécurisée (DCU) est configurée de sorte qu'elle présente exclusivement des supports de stockage volatils et que, en cas d'accès non autorisé à la zone de stockage sécurisée (DCU), la paire de clés cryptographiques est effacée.

2. Procédé selon la revendication précédente, dans lequel la génération de la paire de clés cryptographiques est réalisée par le module de scellement (SSM) qui est exécuté dans la zone de stockage sécurisée.

3. Procédé selon la revendication 1, dans lequel les détenteurs de secret sont des personnes.

4. Procédé selon l'une des revendications précédentes, dans lequel les au moins deux secrets partiels sont générés par le nœud maître.

5. Procédé selon la revendication 4, dans lequel chaque nœud génère, en utilisant les secrets partiels respectifs mis à disposition, le secret (S) avec lequel les paires de clés cryptographiques sont générées, dans lequel les secrets partiels sont générés par le nœud maître de sorte que le secret (S) peut être généré à partir de sous-parties différentes mais de même taille des secrets partiels.
